# FASCICULE DE BREVET EUROPEEN

(11) **EP 2 119 601 B1**
(45) Date de publication et mention de la délivrance du brevet: **23.02.2011**
(21) Numéro de dépôt: 08360013.0
(22) Date de dépôt: 16.05.2008
(51) Int. Cl.: B60R 16/027

(54) **Système de montage en position initialisée neutre d'un contact tournant pour haut de colonne de direction de véhicule**
System zur Montage in neutraler Ausgangsstellung eines Drehkontakts für den oberen Teil der Lenksäule eines Fahrzeugs
System for mounting in a neutral initialised position a rotating connector for the top of a vehicle steering column

(43) Date de publication de la demande: 18.11.2009
(73) Titulaire: Delphi Technologies, Inc., Troy, MI 48007 (US)
(72) Inventeur: La Paglia, Anthony, F-67400 Illkirch (FR); Gaggio, Jean-Michel, F-67400 Illkirch (FR)
(74) Mandataire: Robert, Vincent

(56) Documents cités:
- DE-A1- 4 014 485
- FR-A- 2 710 597
- FR-A- 2 773 127

## Description

La présente invention concerne un contact tournant renfermant des câbles plats munis de conducteurs électriques destinés à assurer une liaison électrique entre un corps rotatif et des dispositifs électriques stationnaires.

De tels dispositifs peuvent avoir de multiples applications, et sont notamment utilisés dans l'industrie automobile, au niveau des hauts de colonne de direction des véhicules. Il s'agit en fait de connecter des éléments situés dans le volant (organes de commande, airbags...) à la circuiterie électrique générale du véhicule, et notamment à l'unité centrale de commande.

Dans ces hypothèses, les contacts tournants comportent un rotor et un stator définissant entre eux un espace d'allure annulaire présentant notamment deux parois en regard entre lesquelles sont disposés un ou plusieurs câbles plats. Pour que le contact tournant puisse jouer son rôle dans de bonnes conditions, il convient évidemment que les câbles munis des conducteurs électriques puissent s'enrouler et se dérouler correctement quels que soient les mouvements du volant. En d'autres termes, le volant pouvant être actionné dans deux sens de rotation opposés, le comportement du contact tournant doit être équivalent dans les deux sens et sur la totalité de l'amplitude de la course angulaire imprimée au volant.

En pratique, dans les véhicules actuels, le volant doit pouvoir tourner de deux tours à deux tours et demi dans chaque sens de rotation. La même contrainte s'applique par conséquent mutatis mutandis au contact tournant. Cette contrainte impose des exigences au montage. Il est en effet nécessaire que les câbles plats soient initialement montés entre le rotor et le stator de manière à avoir une réserve de déroulement / enroulement leur permettant de faire a minima deux tours et demi dans chaque sens. Il faut ensuite que le contact tournant soit monté selon une position initiale neutre correspondant à la position que prend le volant lorsque les roues sont droites.

Pour satisfaire à ces exigences, les constructeurs prévoient actuellement en général un double système de verrouillage constitué d'une part d'un clip localisé à proximité de la colonne de direction du véhicule, et d'autre part d'une clé de verrouillage munie d'une portion cassable se trouvant à proximité de la zone de vissage du contact tournant. Cette clé a pour fonction de garantir la position angulaire au moment de l'assemblage initial du haut de colonne, à la fabrication du véhicule. Le clip mentionné exerce quant à lui la même fonction en cas de maintenance, c'est-à-dire s'il est nécessaire de démonter le volant et le contact tournant pendant la vie du véhicule, l'exigence de réassemblage en position correcte subsistant évidemment en permanence.

Cependant, ces moyens classiques de garantir le positionnement angulaire initial du contact tournant présentent l'inconvénient de réduire l'espace disponible pour les câbles plats à l'intérieur du contact tournant. C'est en particulier vrai pour ce qui concerne le clip de verrouillage, qui empiète sur le volume interne du contact tournant.

Or, actuellement, les constructeurs et équipementiers cherchent de façon très générale à optimiser l'encombrement des composants utilisés dans les habitacles des véhicules automobiles. C'est vrai en particulier pour ce qui concerne les contacts tournants, sachant que le nombre de connexions à réaliser est de plus en plus important et que la tendance est au rallongement des câbles.

Actuellement, deux familles de technologies sont traditionnellement utilisées, en premier lieu la technologie dite des câbles longs, qui souscrit à cette tendance puisqu'on cherche à augmenter la longueur des câbles sans forcément agrandir le contact tournant. En second lieu, lorsque les contacts tournants sont de la famille utilisant la technologie dite à câbles courts, c'est-à-dire utilisant des câbles faisant une boucle à l'intérieur du boîtier, on cherche également à augmenter la longueur et le nombre de ces câbles sans recourir à un système mécanique interne assurant leur tension et sans augmenter l'encombrement global du contact tournant.

L'invention offre des solutions à ces problèmes, en proposant une nouvelle configuration permettant l'installation neutre du contact tournant en position initialisée sans recourir à des systèmes d'installation occupant une partie de l'espace interne du contact tournant au détriment des câbles plats.

A cet effet, l'invention, comportant classiquement un rotor et un stator définissant entre eux un espace d'allure annulaire dans lequel est disposé au moins un câble plat, est configurée de manière telle que le rotor comporte :
- d'une part des moyens d'indexage d'allure radiale assurant le verrouillage en rotation du rotor dans le stator en position initialisée lors du montage du rotor dans le stator ;
- et d'autre part des moyens de déverrouillage actionnés lors du montage du volant ou d'un organe solidaire du volant de direction du véhicule sur le rotor.

Ce type de configuration apparaît déjà dans les documents FR 2 773 127 et FR 2 710 597 qui divulguent des solutions dans lesquelles les moyens d'indexage sont constitués d'un doigt d'allure radiale pour le premier cité, coopérant avec un levier rotatif actionné par le volant, et d'une pièce d'allure axiale pour le second, également actionnée, et escamotée, à l'insertion du volant.

Il ne subsiste plus qu'un unique système mécanique de verrouillage en position initiale neutre, et les moyens d'indexage sont situés à l'extérieur de l'espace dévolu aux câbles plats.

La configuration de l'invention est très différente, telle que les moyens d'indexage consistent en des doigts d'indexage d'allure radiale, le rotor comporte une paroi transversale fermant l'espace annulaire, munie de logements radiaux dans lesquels coulissent élastiquement les doigts d'indexage, les extrémités libres desdits doigts dépassent au repos de la bordure périphérique de la paroi et sont clipsables dans des logements du stator. Le système mécanique d'indexage se trouve en l'occurrence en quelque sorte dans le couvercle de l'espace annulaire que forme le rotor. Cet espace est donc complètement préservé pour que puisse s'y déployer le ou les câbles plats.

Les doigts coulissables du rotor et les logements du stator sont bien entendu disposés pour permettre un positionnement relatif unique de l'un par rapport à l'autre lors du montage du stator sur le rotor. Dans une configuration multidoigt, il reste en effet primordial d'assurer le positionnement initial neutre du contacteur tournant.

Selon le nombre de doigts coulissables, leurs positions ainsi que celles des logements du stator doivent en fait constituer une configuration de détrompage permettant d'empêcher tout positionnement incorrect du contact tournant.

De préférence, les doigts d'indexage sont au nombre de trois, disposés par exemple chacun à 90° d'au moins un autre doigt. Ce nombre permet de simplifier le détrompage mentionné, et garantit par ailleurs qu'aucune manipulation manuelle intempestive ne puisse être exercée sur les doigts d'indexage lors du montage.

Selon une possibilité, l'extrémité libre de chaque doigt est munie d'une surface biseautée permettant le déplacement dudit doigt vers l'axe de rotation à l'encontre d'un ressort placé au fond de son logement radial, lors du montage du rotor sur le stator dans la direction dudit axe.

A cet effet, le montage axial du rotor rencontre, au cours du montage en direction du stator, une bordure de centrage de ce dernier qui exerce une action sur la surface biseautée des doigts, action dont la composante radiale repousse dans un premier temps les doigts vers l'intérieur, puis disparaît au moment où les doigts arrivent en face des logements prévus dans le stator, conduisant à leur clipsage dans lesdits logements du fait de la libération de l'énergie élastique des ressorts.

Par ailleurs, selon une configuration possible, la paroi transversale du rotor peut comporter des fenêtres débouchant dans les logements radiaux, au niveau desquels les doigts d'indexage présentent une surface oblique pouvant coopérer avec une protubérance solidaire du volant lors de son montage, en vue de repousser lesdits doigts vers l'axe central à l'encontre du ressort. La fixation du volant a alors pour effet de déverrouiller le rotor du stator, et donc de permettre la rotation du rotor en même temps que celle du volant.

Au moment du montage dans une direction axiale du volant sur le haut de colonne, les protubérances qui en dépassent permettent en fait de rétracter les doigts d'indexage afin de libérer le contact tournant en rotation. Celui-ci peut alors exercer sa fonction, l'assurance de son positionnement initial correct étant donnée par les étapes précédentes du montage.

Les doigts d'indexage peuvent par ailleurs présenter des butées axiales limitant l'action centrifuge des ressorts, sous forme d'une excroissance se déplaçant dans un évidement de chaque logement radial.

Selon une configuration possible, cet évidement peut être constitué d'une fenêtre traversant la paroi transversale en direction de l'espace annulaire du contacteur.

L'invention va à présent être décrite plus en détail, en référence aux figures annexées, pour lesquelles :
- la figure 1 est une vue en perspective éclatée d'un contacteur tournant disposé entre un haut de colonne de véhicule et un volant ; et
- la figure 2 est une vue en section partielle du contact tournant de l'invention.

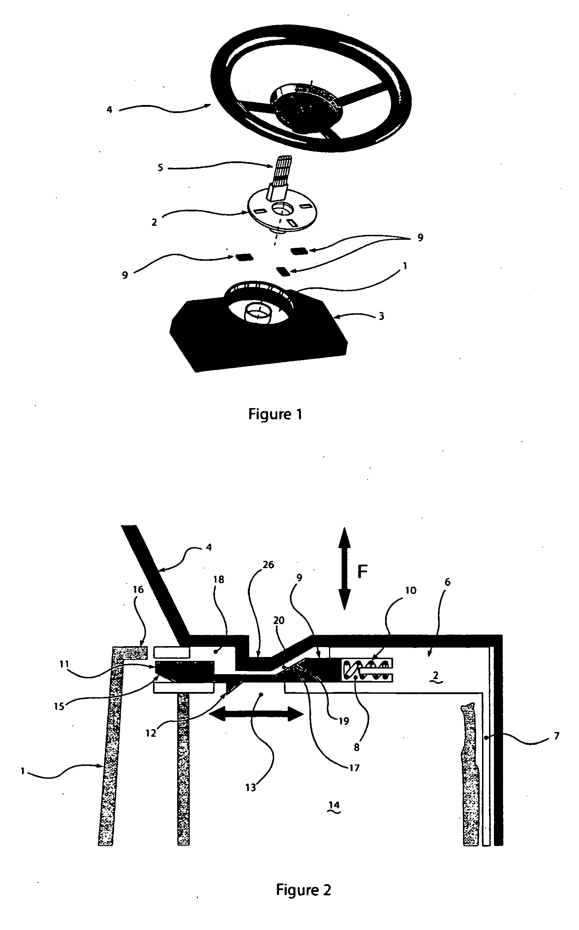

En référence à la figure 1, le contact tournant est composé d'un stator (1), en l'occurrence monté dans le haut de colonne (3) et d'un rotor (2) sur lequel vient s'arrimer un volant (4). Lorsqu'ils sont assemblés, le stator (1) et le rotor (2) délimitent un espace annulaire dans lequel se déploie(nt) le ou les câbles plats permettant de réaliser la liaison électrique entre l'habitacle et des éléments disposés dans le volant (4). Un connecteur (5) permet à cet effet la connexion électrique entre les câbles plats et les composants électriques du volant (4).

Le fonctionnement de l'invention est plus explicite en référence à la figure 2. Le rotor (2) est en fait constitué d'une paroi transversale (6) se déployant autour d'un manchon central (7) permettant son montage sur le haut de colonne ou dans le stator (1). La paroi (6) est munie de logements (8) radiaux dans lesquels peuvent coulisser des doigts d'indexage (9), en l'occurrence au nombre de trois. Un ressort (10) permet de rappeler chaque doigt (9) en position déployée, c'est-à-dire avec l'extrémité (11) dépassant de la paroi (6). Dans ce cas, la butée (12) est au contact de l'extrémité externe d'une fenêtre (13) pratiquée dans la face interne de la paroi (6), celle qui donne sur l'espace annulaire (14) du contacteur tournant. Les doigts coulissant (9) et leur positionnement relatif apparaissent également sur la figure 1. Les extrémités (11) de ces doigts (9) se clipsent dans des logements correspondants du stator (1).

Le fonctionnement est le suivant : au montage, qui se produit dans une direction axiale matérialisée par la flèche F, les parois biseautées (15) des extrémités (11) rencontrent la bordure interne (16) de l'ouverture supérieure du stator (1). Cette bordure (16) exerce une action sur les surfaces biseautées (15) dont la composante perpendiculaire à l'axe de rotation rétracte les doigts vers l'intérieur des logements (8). L'enfichage du rotor est alors possible et, lorsque les doigts (9) arrivent au niveau des logements pratiqués dans le stator (1), ils se clipsent dans ceux-ci sous l'effet de l'action du ressort (10).

Le contacteur tournant est alors monté, dans sa position initiale neutre, mais verrouillé en rotation du fait de la liaison mécanique entre les extrémités (11) des doigts (9) et les logements du stator (1).

Toujours en référence à la figure 2, le volant (4) comporte des protubérances (26) dont le nombre et la position correspondent au nombre et au positionnement des doigts (9). Ces protubérances (26) sont configurées pour coopérer avec des évidements (17) des doigts d'indexage (9). Cette coopération est possible grâce à l'existence de fenêtres (18) débouchant dans les logements radiaux (8) des doigts d'indexage (9). L'évidement (17) comporte une surface oblique (19) de même orientation qu'une surface oblique (20) prévue sur la protubérance (26) du volant.

L'orientation de ces surfaces permet de transformer le mouvement axial de fixation du volant (4), dans la direction de la flèche F, en un mouvement de coulissement transversal des doigts d'indexage (9). Ceux-ci sont alors rétractés à l'intérieur de la paroi radiale (6) et le rotor (2) est libre de tourner en rotation dans le stator (1).

La configuration qui est illustrée dans les figures n'est pas exhaustive de l'invention, laquelle englobe des modifications de forme, par exemple pour les doigts d'indexage ou les logements du stator (1), qui sont à la portée de l'homme de l'art.

## Revendications

1. Contact tournant pour haut de colonne (3) de direction d'un véhicule, assurant des liaisons électriques entre des organes intégrés au volant (4) et l'habitacle du véhicule, comportant un rotor (2) et un stator (1) définissant entre eux un espace d'allure annulaire (14) dans lequel est disposé au moins un câble plat dont chaque extrémité est connectée à un connecteur (5) respectivement du rotor (2) et du stator (1), le rotor (2) comportant d'une part des moyens d'indexage (9) d'allure radiale assurant le verrouillage en rotation du rotor (2) dans le stator (1) en position initialisée lors du montage du rotor (2) dans le stator (1), et d'autre part des moyens de déverrouillage actionnés lors du montage du volant (4) ou d'un organe solidaire du volant (4) de direction du véhicule sur le rotor (2), **caractérisé en ce que** les moyens d'indexage consistent en des doigts d'indexage d'allure radiale, le rotor (2) comporte une paroi transversale (6) fermant l'espace annulaire (14), munie de logements radiaux (8) dans lesquels coulissent élastiquement lesdits doigts d'indexage (9), les extrémités (11) desdits doigts (9) dépassent au repos de la bordure périphérique de la paroi (6) et sont clipsables dans des logements du stator (1).

2. Contact tournant selon la revendication précédente, **caractérisé en ce que** les doigts (9) coulissables du rotor (2) et les logements du stator (1) sont positionnés pour permettre un positionnement relatif unique de l'un par rapport à l'autre lors du montage du stator (1) sur le rotor (2).

3. Contact tournant selon la revendication précédente, **caractérisé en ce que** les doigts d'indexage (9) sont au nombre de trois, disposés chacun à 90° d'au moins un autre doigt (9).

4. Contact tournant selon l'une quelconque des revendications précédentes, **caractérisé en ce que** l'extrémité (11) libre de chaque doigt (9) est munie d'une surface biseauté (15) permettant le déplacement dudit doigt (9) vers l'axe de rotation à l'encontre d'un ressort (10) placé au fond de son logement radial (8), lors du montage du rotor (2) sur le stator (1) selon ledit axe.

5. Contact tournant selon la revendication précédente, **caractérisé en ce que** la paroi transversale (6) du rotor (2) comporte des fenêtres (18) débouchant dans les logements radiaux (8), au niveau desquels les doigts d'indexage (9) présentent une surface oblique (19) pouvant coopérer avec une protubérance (26) solidaire du volant (4) lors de son montage, en vue de repousser les doigts (9) vers l'axe de rotation à l'encontre du ressort (10).

6. Contact tournant selon l'une des revendications 4 et 5, **caractérisé en ce que** les doigts d'indexage (9) présentent des butées (12) axiales limitant l'action centrifuge des ressorts (10), sous forme d'une excroissance se déplaçant dans un évidement (13) de chaque logement radial (8).

7. Contact tournant selon la revendication précédente, **caractérisé en ce que** l'évidement (13) est une fenêtre traversant la paroi transversale (6) en direction de l'espace annulaire (14) du contact tournant.

## Claims

1. Rotary contact for the top of the steering column (3) of a vehicle, providing electrical connections between organs integrated in the steering wheel (4) and the passenger space of the vehicle, including a rotor (2) and a stator (1) between them defining an annular space (14) in which is arranged at least one flat cable each end of which is connected respectively to a connector (5) of the rotor (2) and of the stator (1), the rotor (2) including on the one hand radial indexing means (9) locking the rotor (2) in rotation in the stator (1) in a position initialised when the rotor (2) is mounted in the stator (1), and on the other unlocking means actuated on mounting of the steering wheel (4) or of an organ rigidly attached to the steering wheel (4) of the vehicle on the rotor (2), **characterised by** the fact that the indexing means consist of radial indexing fingers, the rotor (2) includes a transversal wall (6) closing the annular space (14), provided with radial housings (8), in which the said indexing fingers (9) slide elastically, the ends (11) of the said fingers (9) extend at rest beyond the peripheral edge of the wall (6) and snap-fittable in housings of the stator (1).

2. Rotary contact as described in the preceding claim, **characterised by** the fact that the slidable fingers (9) of the rotor (2) and the housings of the stator (1) are positioned to allow a single relative positioning of the one relative to the other on mounting of the stator (1) on the rotor (2).

3. Rotary contact as described in the preceding claim, **characterised by** the fact that the indexing fingers (9) are three in number, each arranged at 90° to at least one other finger (9).

4. Rotary contact as described in any one of the preceding claims, **characterised by** the fact that the free end (11) of each finger (9) is provided with a bevelled surface (15) permitting displacement of the said finger (9) towards the axis of rotation against a spring (10) placed at the back of its radial housing (8), on mounting of the rotor (2) on the stator (1) along the said axis.

5. Rotary contact as described in the preceding claim, **characterised by** the fact that the transversal wall (6) of the rotor (2) includes windows (18) opening into the radial housings (8), at the level of which the indexing fingers (9) present a slanting surface (19) able to co-operate with a protuberance (26) rigidly attached to the steering wheel (4) when it is mounted, in order to push the fingers (9) back towards the axis of rotation against the spring (10).

6. Rotary contact as described in one of claims 4 and 5, **characterised by** the fact that the indexing fingers (9) present axial stops (12) limiting the centrifugal action of the springs (10), in the form of a protuberance being displaced in a cavity (13) of each radial housing (8).

7. Rotary contact as described in the preceding claim, **characterised by** the fact that the cavity (13) is a window passing through the transversal wall (6) towards the annular space (14) of the rotary contact.

## Patentansprüche

1. Drehkontakt für den oberen Teil (3) der Lenksäule eines Fahrzeugs, der elektrische Verbindungen zwischen in das Lenkrad (4) integrierten Organen und dem Karosseriegehäuse des Fahrzeugs gewährleistet und einen Läufer (2) und einen Ständer (1) umfasst, die miteinander einen Raum (14) von ringförmigem Verlauf begrenzen, in dem mindestens ein Flachkabel angeordnet ist, von dem jedes Ende mit einem Verbinder (5) des Läufers (2) bzw. des Ständers (1) verbunden ist, wobei der Läufer (2) einerseits radial verlaufende Indexiermittel (9) umfasst, die die Verriegelung des Läufers (2) im Ständer (1) bezüglich Drehung in einer bei der Montage des Läufers (2) im Ständer (1) initialisierten Stellung gewährleisten, und andererseits Entriegelungsmittel, die bei der Montage des Lenkrads (4) oder eines mit dem Lenkrad (4) des Fahrzeugs fest verbundenen Organs auf dem Läufer (2) betätigt werden, **dadurch gekennzeichnet, dass** die Indexiermittel aus radial verlaufenden Indexierfingern bestehen, der Läufer (2) eine den ringförmigen Raum (14) verschließende Querwand (6) umfasst, die mit radialen Aussparungen (8) versehen ist, in denen die Indexierfinger (9) elastisch gleiten, die Enden (11) der Finger (9) in Ruhestellung über den Umfangsrand der Wand (6) hinausragen und in Aussparungen des Ständers (1) einrastbar sind.

2. Drehkontakt nach dem vorhergehenden Anspruch, **dadurch gekennzeichnet, dass** die verschiebbaren Finger (9) des Läufers (2) und die Aussparungen des Ständers (1) so positioniert sind, dass sie bei der Montage des Ständers (1) auf dem Läufer (2) eine einzige relative Positionierung des einen bezüglich des anderen gestatten.

3. Drehkontakt nach dem vorhergehenden Anspruch, **dadurch gekennzeichnet, dass** die Indexierfinger (9) in der Anzahl von drei vorgesehen sind, die jeweils zu mindestens einem anderen Finger (9) in 90° angeordnet sind.

4. Drehkontakt nach einem der vorhergehenden Ansprüche, **dadurch gekennzeichnet, dass** das freie Ende (11) jedes Fingers (9) mit einer abgeschrägten Fläche (15) versehen ist, die, bei der Montage des Läufers (2) auf dem Ständer (1) in der Drehachse, die Bewegung des Fingers (9) auf diese Drehachse zu entgegen einer im Boden seiner radialen Aussparung (8) angeordneten Feder (10) gestattet.

5. Drehkontakt nach dem vorhergehenden Anspruch, **dadurch gekennzeichnet, dass** die Querwand (6) des Läufers (2) in die radialen Aussparungen (8) ausmündende Fenster (18) umfasst, auf deren Höhe die Indexierfinger (9) eine Schrägfläche (19) aufweisen, die mit einer mit dem Lenkrad (4) fest verbundenen Erhebung (26) bei dessen Montage zusammenwirken kann, um die Finger (9) entgegen der Feder (10) auf die Drehachse zu zurückzudrücken.

6. Drehkontakt nach einem der Ansprüche 4 und 5, **dadurch gekennzeichnet, dass** die Indexierfinger (9) die zentrifugale Wirkung der Federn (10) begrenzende axiale Anschläge (12) in Form eines Vorsprungs aufweisen, der sich in einer Ausnehmung (13) jeder radialen Aussparung (8) bewegt.

7. Drehkontakt nach dem vorhergehenden Anspruch, **dadurch gekennzeichnet, dass** die Ausnehmung (13) ein Fenster ist, das die Querwand (6) in Richtung auf den ringförmigen Raum (14) des Drehkontakts durchquert.
